# EUROPEAN PATENT APPLICATION

(11) **EP 0 691 254 A1**
(43) Date of publication of application: **10.01.1996**
(21) Application number: 94830430.8
(22) Date of filing: 14.09.1994
(51) Int. Cl.: B62D 1/04

(54) **Steering wheel**

(30) Priority: 08.07.1994 IT TO940149
(71) Applicant: GESTIND-M.B." MANIFATTURA DI BRUZOLO" S.P.A, I-10050 Bruzolo (Torino) (IT)
(72) Inventor: De Filippo, Emilio, I-10050 Bruzolo, Torino (IT)
(74) Representative: Buzzi, Franco

(57) **Abstract**

A steering wheel (1) comprises a rim (2) and a hub (3) connected to the rim (2) by substantially radial spokes (4). The rim (2) has for the major part of the perimeter thereof a non-circular curvilinear cross section (2a, 2b), and the ends of the spokes (4) opposite to the hub (3) are bent like closed cylindrical sleeves (8) around corresponding attachment areas (2c) of the rim (2), with their terminal edges welded (9) onto the respective spokes (4).

## Description

The present invention is related to steering wheels, particularly for motor vehicles, comprising a rim and a hub connected to the rim by substantially radial spokes.

In steering wheels according to the prior art the rim has as a rule a circular cross section and the spokes connecting the hub to the rim are generally butt welded on the inner surface thereof.

This configuration is not without inconveniences both from the point of view of the manufacture of the steering wheel, and as far as use thereof is concerned.

Firstly, the circular section of the rim, which is normally formed by a circularly bent metal tube, obliges employing a relevant wall thickness in order to guarantee the necessary rigidity against flexure and torsion of the steering wheel. This involves a relevant weight of the steering wheel, which negatively affects the polar moment of inertia thereof with consequent dangerous effects deriving in use by the return action of the steered wheels, particularly as far as applications to motor vehicles without power steering and stabilizer bar are concerned. Moreover the circular cross section of the rim involves anchoring problems of the wheel cover pad, which is normally made of foamed plastic material moulded over the rim, with the risk of undesired angular displacements of the cover pad relative to the rim.

Fixing of the spokes by means of butt welding onto the inner surface of the rim involves on the other hand both manufacturing difficulties, and risks of breakage and thus of separation of the spokes from the rim, with the dangerous consequences which may derive thereby.

The object of the present invention is to overcome the above drawbacks, and in particular to provide a steering wheel of the above-referenced type having a rugged but light structure, adapted to ensure both an efficient anchoring of the cover pad on the rim, and a sturdy and efficient securing of the hub spokes relative to the rim.

According to the invention, this object is achieved essentially by virtue of the fact that the rim has for the major part of the perimeter thereof a non-circular curvilinear cross section, and of the fact that the ends of the spokes opposite to the hub are bent like closed cylindrical sleeves around corresponding attachment areas of the rim, with their respective terminal edges welded onto the respective spokes.

This design enables appreciably reducing the wall thickness of the rim, with the advantage of making the steering wheel particularly light but at the same time stress-resistant in use, as well as of providing a steady anchoring of the rim cover pad and of simplifying fixing of the spokes, which is on the other hand such as to warrant a firm and a sturdy coupling thereof relative to the rim.

To the aim of making still more easy the connection of the spokes to the rim, said attachment areas of the rim and said sleeve-bent ends of the spokes have a circular cross section.

According to a preferred embodiment of the invention, the non-circular cross section of the rim is conveniently formed by two substantially round arch convex portions having different radiuses, and by two concave portions interconnecting said convex portions.

The invention will now be described in detail with reference to the annexed drawings, purely provided by way of non-limiting example, in which:

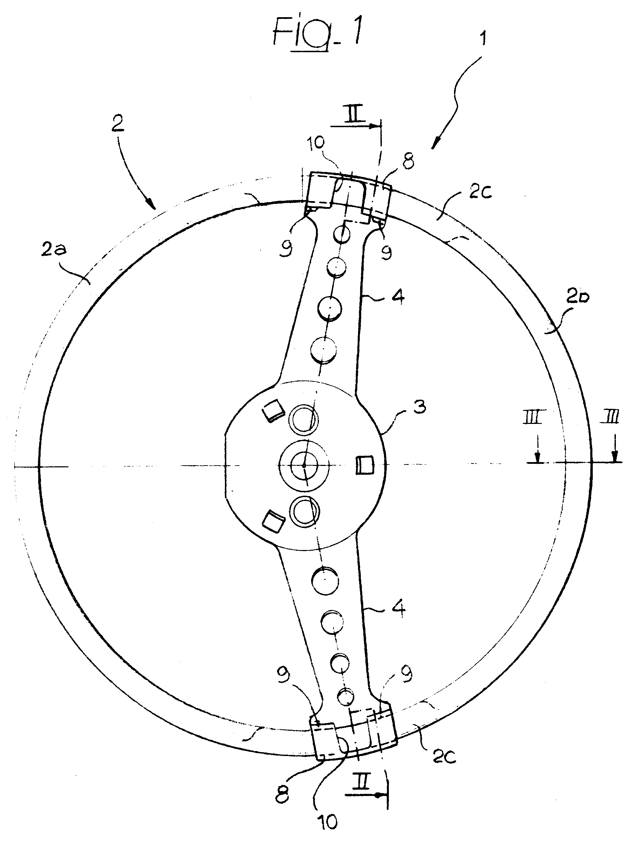

figure 1 is a diagrammatic front elevation view of a steering wheel according to the invention,
figure 2 is a cross section along line II-II of figure 1, and
figure 3 is a cross section along line III-III of figure 1.

Referring to the drawings, reference 1 generally designates a steering wheel according to the invention, constituted by a hollow metal rim 2 having a circular shape and by a hub 3 connected to the rim 2 by a pair of substantially radial opposite spokes 4.

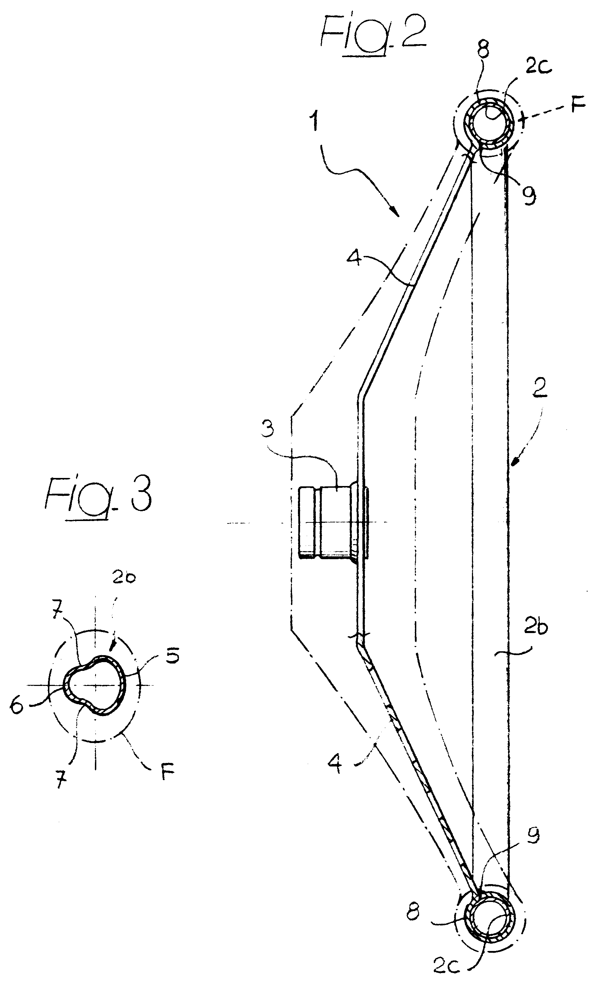

According to a first aspect of the invention, the rim 2 has two angular portions 2a, 2b situated on opposite sides relative to the spokes 4 and each having an angular extension slightly less than 180°, both provided with an identical non-circular curvilinear cross section. As it is shown in better detail in figure 3, this non-circular cross section is formed by two opposed convex portions 5, 6, substantially shaped like round arches with longer and shorter radius, respectively, and by two concave portion 7 which interconnect the concave portions 5 and 6. By virtue of this configuration, the rim 2 is globally provided with an increased torsional and flexional strength, even with a reduced wall thickness, and at the same time it guarantees a steady and firm anchoring thereon of the foamed plastic material cover pad of the steering wheel, diagrammatically shown by dotted lines F in figures 2 and 3.

The two portions of the rim 2 comprised between the portions 2a and 2b, referenced as 2c, are instead provided with a conventionally circular cross section, to the aim of facilitating fixing between the ends of the spokes 4 opposite to the hub 3, and the rim 2.

As shown in detail in figure 2, these ends of the spokes 4 are bent like closed cylindrical sleeves 8 around the respective portions 2c of the rim 2, and the respective terminal edges thereof are welded at 9 onto the spokes 4 themselves . The two cylindrical sleeves 8 are conveniently formed with respective recesses 10 in the front areas of the respective walls, and advantageously act also as stiffening members of the circular cross section portions 2c of the rim 2.

By virtue of this configuration, fixing between the spokes 4 and the rim 2 can be performed in a constructively simple way, ensuring a firm and sturdy connection between the spokes 4 and the rim 2.

Naturally the details of construction and the design of the steering wheel may be widely varied with respect to what has been disclosed and illustrated, without thereby departing from the scope of the present invention, such as defined in the appended claims.

## Claims

1. Steering wheel (1) comprising a rim (2) and a hub (3) connected to the rim (2) by substantially radial spokes (4), characterized in that the rim (2) has for the major part of the perimeter thereof a non-circular curvilinear cross section (2a, 2b), and by the fact that the ends of the spokes (4) opposite to the hub (3) are bent like closed cylindrical sleeves (8) around corresponding attachment areas (2c) of the rim (2), with their respective terminal edges welded (9) onto the spokes (4).

2. Steering wheel according to claim 1, characterized in that said attachment areas (2c) of the rim (2) and said sleeve-bent ends (8) of the spokes (4) have a circular cross section.

3. Steering wheel according to claim 1 or claim 2, characterized in that the non-circular cross section (2a, 2b) of the rim (2) is formed by two substantially round arch convex portions (5, 6) having different radiuses, and by two concave portions (7) interconnecting said convex portions (5, 6).
